# DEMANDE DE BREVET EUROPEEN

(11) **EP 1 203 526 A1**
(43) Date de publication de la demande: **08.05.2002**
(21) Numéro de dépôt: 01402784.1
(22) Date de dépôt: 26.10.2001
(51) Int. Cl.: A01G 13/02

(54) **Dispositif de protection contre les éléments naturels, notamment pour les végétaux**

(30) Priorité: 03.11.2000 FR 0014360
(71) Demandeur: Ravoyard, Eric, 39380 Mont Sous Vaudrey (FR)
(72) Inventeur: Ravoyard, Eric, 39380 Mont Sous Vaudrey (FR)
(74) Mandataire: Ballot, Paul Denis Jacques

(57) **Abrégé**

Dispositif de protection des végétaux contre les éléments naturels tels que grêle, gel, vent violent etc.., caractérisé en ce qu'il comporte au moins un élément de couverture (2) destiné à être déployé de part et d'autre de la ligne de végétaux (3), ledit élément (2) étant initialement roulé sur lui-même à partir de chacune de ses extrémités libres latérales, autour de deux éléments d'enroulement ou de déroulement (4) distincts, disposés dans une position d'attente de part et d'autre du sommet S de la ligne de végétaux (3) et susceptibles d'entraîner l'élément de couverture (2) en déroulement ou en réenroulement par l'intermédiaire de moyens (6), aptes à assurer à la demande une augmentation ou une diminution de leurs masses respectives s'effectuant selon un rapport Δ mini-maxi.

## Description

La présente invention concerne un dispositif de protection contre les éléments naturels tels que, grêle, gel, vent violent etc.., destiné notamment aux végétaux cultivés en lignes tels que, arbres fruitiers, vignes, légumes etc..

En effet, il est souvent nécessaire de protéger ces derniers contre les variations climatiques et l'expérience montrent que l'on est généralement désarmé contre ces derniers.

Les dispositifs connus comme par exemple les tunnels, qui sont composés d'arceaux sur lesquels est tendu un revêtement en matière plastique, s'ils permettent la protection des végétaux de petites tailles comme les légumes par exemple, en revanche, ils ne permettent pas la protection des végétaux plus hauts tels que la vigne ou les arbres fruitiers.

De plus, les dispositifs précités ont plutôt un rôle de serre et leur manutention pour leur mise en place ou pour leur retrait est longue et fastidieuse, donc onéreuse.

De plus, des problèmes de stockage existent du fait de leur encombrement.

En ce qui concerne les végétaux de grandes tailles, il est également connu de les protéger contre les oiseaux en disposant des filets enveloppants.

Bien que l'on puisse imaginer que ceux-ci puissent également protéger des intempéries comme la grêle par exemple, il n'en reste pas moins vrai que leur mise en place est très difficile et doit s'effectuer obligatoirement de façon manuelle.

La présente invention a pour but de remédier à l'ensemble des inconvénients précités et concerne à cet effet un élément de couverture destiné à être déployé de part et d'autre de la ligne de végétaux, ledit élément étant initialement roulé sur lui-même à partir de chacune de ses extrémités libres latérales, autour de deux éléments d'enroulement ou de déroulement distincts, disposés dans une position d'attente de part et d'autre du sommet de la ligne de végétaux et susceptibles d'entraîner l'élément de couverture en déroulement ou en réenroulement par l'intermédiaire de moyens, aptes à assurer à la demande une augmentation ou une diminution de leurs masses respectives s'effectuant selon un rapport mini-maxi, des moyens de rappel élastiques agissant automatiquement sur lesdits éléments d'enroulement ou de déroulement dans un sens ou dans l'autre, selon une force variant proportionnellement audit rapport de masse de ceux-ci.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 est une vue en perspective d'une ligne de végétaux, tel qu'un rang de vigne, protégé par le dispositif selon l'invention.

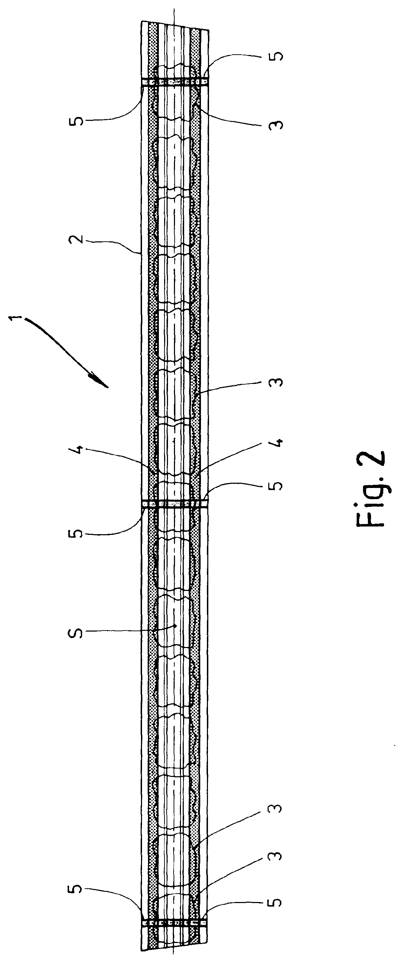

La figure 2 est une vue de dessus selon la figure 1.
La figure 3 est une vue montrant le déploiement du dispositif de protection selon les figures précédentes, au cours de différentes phases allant du reploiement complet au déploiement complet.

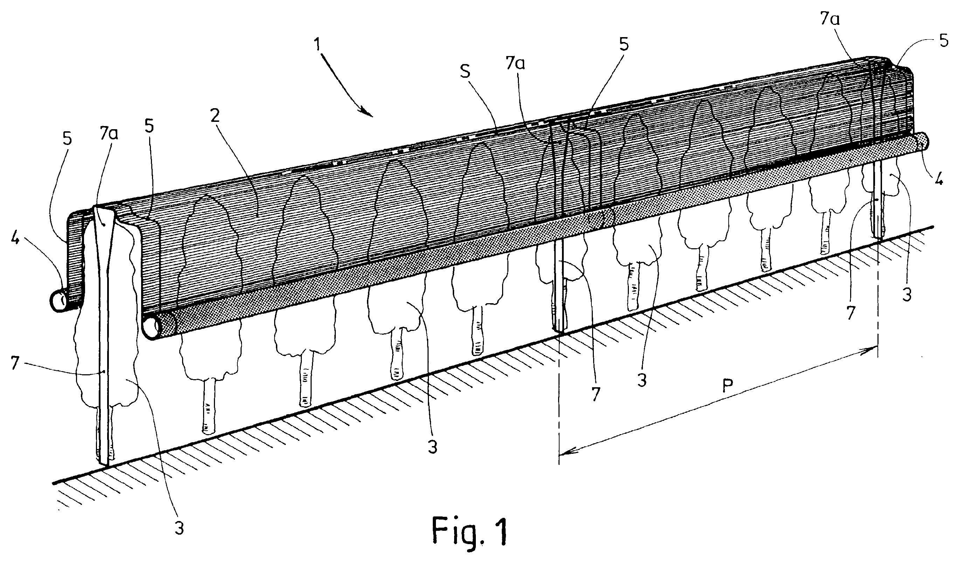

Le dispositif de protection 1 désigné globalement à la figure 1 comporte à titre d'exemple non limitatif un élément de couverture 2 destiné à être déployé de part et d'autre de la ligne de végétaux 3. Ledit élément 2 ést initialement roulé sur lui-même à partir de chacune de ses extrémités libres latérales, autour de deux éléments d'enroulement ou de déroulement 4 distincts, disposés dans une position d'attente de part et d'autre du sommet S de la ligne de végétaux 3. Ils sont susceptibles d'entraîner l'élément de couverture 2 en déroulement ou en réenroulement par l'intermédiaire de moyens 6, aptes à assurer à la demande une augmentation ou une diminution de leurs masses respectives s'effectuant selon un rapport Δ mini-maxi. Par ailleurs des moyens de rappel élastiques 5 agissent automatiquement sur lesdits éléments d'enroulement ou de déroulement 4 dans un sens ou dans l'autre, selon une force variant proportionnellement audit rapport de masse Δ de ceux-ci.

En fait, les moyens 6 de variation du rapport Δ mini-maxi des masses des éléments d'enroulement et de déroulement 4 sont constitués par une matière liquide ou solide, externe au dispositif 1, agissant en remplissage sur ceux-ci automatiquement ou non directement ou indirectement, et issue des phénomènes climatique naturels ou de toute autre source d'alimentation extérieure.

Selon un exemple particulièrement avantageux de l'invention, la matière de remplissage 6 des tubes 4 constituant les éléments d'enroulement ou de déroulement est la pluie, agissant naturellement et automatiquement sur ceux-ci en déroulement.

Selon un autre exemple, la matière de remplissage 6 des tubes 4 constituant les éléments d'enroulement ou de déroulement est la grêle, agissant naturellement et automatiquement sur ceux-ci en déroulement.

Selon encore un autre exemple, la matière de remplissage 6 des tubes 4 constituant les éléments d'enroulement ou de déroulement est l'eau issue d'un réseau de distribution agissant sur ceux-ci à la demande.

Selon les exemples précités, mais plus particulièrement selon le dernier exemple, la matière de remplissage 6 des tubes constituant les éléments d'enroulement ou de déroulement est, soit introduite dans ceux-ci selon un volume prédéterminé pour en augmenter leur masse, en fonction d'un déroulement selon une valeur souhaitée, agissant à l'encontre des moyens de rappel élastiques 5, ou soit au contraire en est extraite pour provoquer leur allègement et conséquemment le renouvellement par action des mêmes moyens de rappel élastiques 5.

Avantageusement, mais cela n'est nullement limitatif, les moyens de rappel élastiques 5 des éléments d'enroulement et de déroulement 4 sont constitués par des éléments exclusivement mécaniques.

Selon le présent exemple de réalisation les moyens de rappel élastiques 5 des éléments d'enroulement et de déroulement 4 sont constitués par une pluralité de ressorts en spirale disposés par couple de part et d'autre des parties supérieures 7a d'éléments support 7 placés alternativement selon un pas P prédéterminé, le long de la ligne de végétaux 3, à proximité de leur sommet S. L'une des extrémités de chacun des ressorts est fixée sur l'élément support 7, alors que l'autre extrémité est solidarisée des éléments libres d'enroulement et de déroulement 4, pour constituer autant de points de fixation et de rappel élastique de ceux-ci.

Selon un perfectionnement de l'invention le remplissage ou le vidage des éléments d'enroulement ou de déroulement 4 est effectué par l'intermédiaire de moyens de commande automatiques, déclenchables en fonction des conditions climatiques.

Selon un autre perfectionnement de l'invention l'élément de couverture 2 est associé à un réseau de fils résistants reliés à un réseau électrique ou à une batterie d'accumulateurs autonome de manière à constituer une couverture chauffante apte à lutter contre le gel.

Préférentiellement, la couverture de protection 2 est réalisée en un matériau souple, imputrescible et présente des mailles de dimensions prédéterminées, de manière à être perméable à l'eau, à l'air et à la lumière, tout en constituant une barrière contre la grêle.

Selon une variante de réalisation, la couverture de protection 2 est réalisée en un matériau souple, imputrescible et imperméable, simple ou double épaisseur.

D'une manière globale et selon un avantage supplémentaire de l'invention, le dispositif de protection selon l'invention peut être laissé en place de la manière décrite ci-dessus mais il est également tout à fait possible de le rendre amovible.

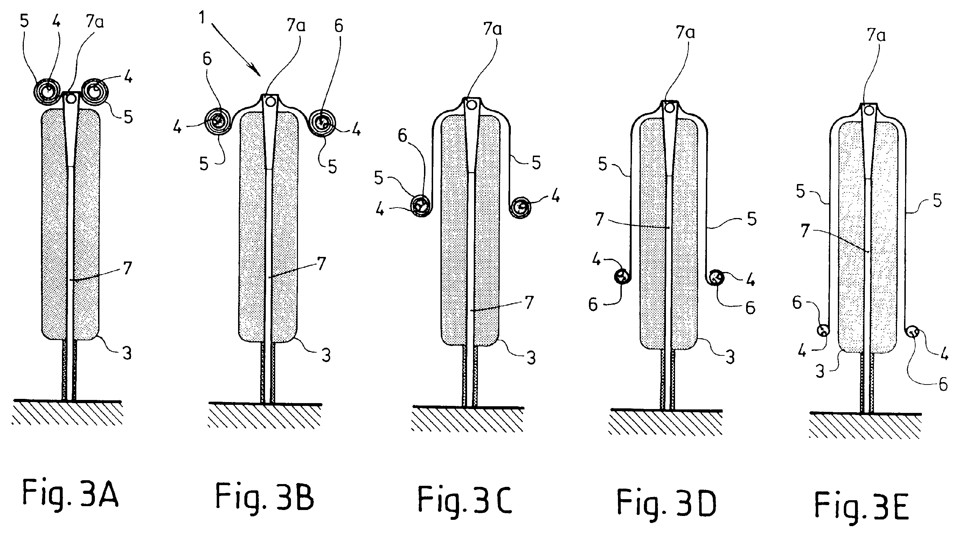

Comme bien illustré à la figure 3, le fonctionnement du dispositif qui vient d'être décrit est le suivant : dans la position selon la figure 3A, le dispositif est en position de reploiement sur lui-même, c'est à dire que cette position est automatiquement reprise lorsque les tubes 4 sont vidés du liquide de remplissage 6.

Comme le montre les figures 3B, 3C, 3D et 3E, la masse des tubes 4 augmentant au fur et à mesure de leur remplissage, que celui-ci soit effectué à partir d'une source d'alimentation en eau ou naturellement par la pluie ou encore par la grêle, il se produit selon un phénomène naturel de gravitation, une descente vers le bas desdits tubes 4, et conséquemment, un déroulement de la couverture 2 et des ressorts en spirale 5 jusqu'à déroulement complet de ceux-ci.

Le réenroulement de ladite couverture 2 s'effectuera de façon tout à fait naturelle par vidage des tubes 4 de l'eau qu'ils contiennent en ouvrant une valve automatique ou encore manuelle.

## Revendications

1. Dispositif de protection contre les éléments naturels tels que grêle, gel, vent violent etc.., destiné notamment aux végétaux cultivés en ligne tels que, arbres fruitiers, vignes, légumes etc... **caractérisé en ce qu'**il comporte au moins un élément de couverture (2) destiné à être déployé de part et d'autre de la ligne de végétaux (3), ledit élément (2) étant initialement roulé sur lui-même à partir de chacune de ses extrémités libres latérales, autour de deux éléments d'enroulement ou de déroulement (4) distincts, disposés dans une position d'attente de part et d'autre du sommet S de la ligne de végétaux (3) et susceptibles d'entraîner l'élément de couverture (2) en déroulement ou en réenroulement par l'intermédiaire de moyens (6), aptes à assurer à la demande une augmentation ou une diminution de leurs masses respectives s'effectuant selon un rapport Δ mini-maxi, des moyens de rappel élastiques (5) agissant automatiquement sur lesdits éléments d'enroulement ou de déroulement (4) dans un sens ou dans l'autre, selon une force variant proportionnellement audit rapport de masse Δ de ceux-ci.

2. Dispositif de protection selon la revendication 1, **caractérisé en ce que** les moyens (6) de variation du rapport Δ mini-maxi des masses des éléments d'enroulement et de déroulement (4) sont constitués par une matière liquide ou solide, externe au dispositif (1), agissant en remplissage sur ceux-ci automatiquement ou non, directement ou indirectement, et issue des phénomènes climatique naturels ou de toute autre source d'alimentation extérieure.

3. Dispositif de protection selon la revendication 2, **caractérisé en ce que** les éléments d'enroulement ou de déroulement (4) sont constitués par des tubes aptes à être remplis par la matière liquide ou solide (6) ou au contraire à en être vidé pour obtenir la variation de leur masse de manière positive ou négative.

4. Dispositif de protection selon les revendications 2 ou 3, **caractérisé en ce que** la matière de remplissage (6) des tubes (4) constituant les éléments d'enroulement ou de déroulement est la pluie, agissant naturellement et automatiquement sur ceux-ci en déroulement.

5. Dispositif de protection selon les revendications 2 ou 3, **caractérisé en ce que** la matière de remplissage (6) des tubes (4) constituant les éléments d'enroulement ou de déroulement est la grêle, agissant naturellement et automatiquement sur ceux-ci en déroulement.

6. Dispositif de protection selon les revendications 2 ou 3, **caractérisé en ce que** la matière de remplissage (6) des tubes (4) constituant les éléments d'enroulement ou de déroulement est l'eau issue d'un réseau de distribution agissant sur ceux-ci à la demande.

7. Dispositif de protection selon l'une des revendications 2 à 6, **caractérisé en ce que** la matière de remplissage (6) des tubes constituant les éléments d'enroulement ou de déroulement est, soit introduite dans ceux-ci selon un volume prédéterminé pour en augmenter leur masse, en fonction d'un déroulement selon une valeur souhaitée, agissant à l'encontre des moyens de rappel élastiques (5), ou soit au contraire en est extraite pour provoquer leur allègement et conséquemment le renouvellement par action des mêmes moyens de rappel élastiques (5).

8. Dispositif de protection selon l'une des revendications 2 à 7, **caractérisé en ce que** les moyens de rappel élastiques (5) des éléments d'enroulement et de déroulement (4) sont constitués par des éléments exclusivement mécaniques.

9. Dispositif de protection selon la revendication 8, **caractérisé en ce que** les moyens de rappel élastiques (5) des éléments d'enroulement et de déroulement (4) sont constitués par une pluralité de ressorts en spirale disposés par couple de part et d'autre des parties supérieures (7a) d'éléments support (7) placés alternativement selon un pas (P) prédéterminé, le long de la ligne de végétaux (3), à proximité de leur sommet (S), l'une des extrémités de chacun d'eux étant fixée sur l'élément support (7) alors que l'autre est solidarisée des éléments libres d'enroulement et de déroulement (4), pour constituer autant de points de fixation et de rappel élastique de ceux-ci.

10. Dispositif de protection selon l'une des revendications de 7 à 9, **caractérisé en ce que** le remplissage ou le vidage des éléments d'enroulement ou de déroulement (4) est effectué par l'intermédiaire de moyens de commande automatiques, déclenchables en fonction des conditions climatiques.

11. Dispositif de protection selon l'une des revendications de 1 à 10, **caractérisé en ce que** l'élément de couverture (2) est associé à un réseau de fils résistants reliés à un réseau électrique ou à une batterie d'accumulateurs autonome de manière à constituer une couverture chauffante apte à lutter contre le gel.

12. Dispositif de protection selon l'une des revendications de 1 à 11, **caractérisé en ce qu'**il est amovible.

13. Dispositif de protection selon l'une des revendications de 1 à 12, **caractérisé en ce que** la couverture de protection (2) est réalisée en un matériau souple, imputrescible.

14. Dispositif de protection selon l'une des revendications de 1 à 12, **caractérisé en ce que** la couverture de protection (2) est réalisée en un matériau souple, imputrescible et imperméable, simple ou double épaisseur.
